# EUROPEAN PATENT SPECIFICATION

(11) **EP 0 972 182 B1**
(45) Date of publication and mention of the grant of the patent: **30.01.2002**
(21) Application number: 98914398.7
(22) Date of filing: 31.03.1998
(51) Int. Cl.: G01N 19/04

(54) **ELECTROSTATIC ADHESION TESTER FOR THIN FILM CONDUCTORS**
ELKETROSTATISCHER HAFTFESTIGKEITSPRÜFER FÜR DÜNNSCHICHTLEITER
TESTEUR ELECTROSTATIQUE DE L'ADHERENCE DE CONDUCTEURS EN COUCHES MINCES

(30) Priority: 31.03.1997 US 42243 P; 20.01.1998 US 8969
(43) Date of publication of application: 19.01.2000
(73) Proprietor: RICE UNIVERSITY, Houston, TX 77005 (US)
(72) Inventor: GRIFFIN, Alfred, J., Jr., Dallas, TX 75206 (US); BROTZEN, Franz, R., Houston, TX 77025 (US); CALLAHAN, Daniel, L., Dallas, TX 75214 (US); YANG, Haining, S., Boise, ID 83706 (US)
(74) Representative: Haines, Miles John
(86) International application number: US9806424
(87) International publication number: WO9844334

(56) References cited:
- DATABASE WPI Section EI, Week 9203 Derwent Publications Ltd., London, GB; Class S03, AN 92-022580 XP002069186 & SU 1 627 931 A (BAYAVITOV R A)
- DATABASE WPI Section EI, Week 9422 Derwent Publications Ltd., London, GB; Class S03, AN 94-181915 XP002069187 & SU 1 805 346 A (APPL OPTICS INST)
- DATABASE WPI Section EI, Week 8750 Derwent Publications Ltd., London, GB; Class S03, AN 87-354737 XP002069188 & SU 1 310 699 A (GOMEL POLY)
- PATENT ABSTRACTS OF JAPAN vol. 017, no. 445 (P-1593), 16 August 1993 & JP 05 099840 A (TOYO SEIKI SEISAKUSHO:KK), 23 April 1993,

## Description

### 1. Field of the Invention

The present invention relates to the field of adhesion testing and more particularly to a non-contact method for testing the adhesion of a thin film conductor and a variety of substrates.

### 2. Description of Related Art

In the field of semiconductor fabrication, thin film metals are an important component in the fabrication of very large scale integration (VLSI) devices. These metal films are usually either deposited from a vapor phase or sputtered onto a substrate made of a different material. A typical application would be to deposit a thin film metal onto a dielectric layer to produce an interconnect level in a CMOS device.

VLSI fabrication requires that thin film metals must meet several strict structural, chemical, and electrical requirements. A universal concern in the fabrication of VLSI devices is the ability to etch submicron features into the thin film materials. To facilitate these miniature etchings, the fabrication of the materials must be carefully controlled. The demands for narrow line widths and high densities in the production of VLSI devices create a critical requirement for very low densities of particulate defects and film imperfections, such as pinholes. A result of these submicron etchings is that the underlying surface often becomes extremely rough. It is therefore necessary to have excellent adhesion between the underlying substrate and the overlaying thin film metal.

The adhesion of thin film metals used in VLSI processing must be of the highest quality throughout the time it is being deposited and continuing thereafter. If at any time, the metal film lifts from the substrate, the device will almost certainly fail. Therefore, excellent adhesion is necessary to ensure the reliability of the device. Adhesion strength will rapidly become a critical metric within the microelectronics industry, particularly as material systems and devices become more complex.

Various methods and techniques have been employed in the prior art to measure the adhesion strength of thin film metals on substrates. An early method of measuring adhesion involved pressing a piece of adhesive tape to the surface of the film and then pulling the tape off. The tape and substrate were then examined to determine if any or all of the film was pulled away. This method was called the "tape test." and failure of this test obviously implied that the film was not suitable for device fabrication. The most significant disadvantage of this test was that attempts at measuring the adhesive strength of the thin films were only qualitative and produced a wide distribution of results.

A second method that has been used in measuring adhesion strength is the "scratch" or "indentation method." This method produces results that depend both on the film hardness and on the adhesion quality of the thin film. To begin this process, pressure is applied, perpendicular to the film surface, to a chrome-steel point which is then moved horizontally across the film surface. The pressure on the point is increased until the point strips the film completely from the substrate. The groove from where the film was stripped is then observed with a microscope. The maximum pressure that was applied to the point is taken as a measure of the adhesion strength of the thin film. An improvement over the tape test, the indentation method is never theless very time consuming and requires that the adhesion strength be resolved from a combination of other measurements.

A third method previously used to measure the adhesion strength of thin film metals required a small pin to be epoxied to the surface of the film. Then the surrounding thin film material was removed from around the pin and epoxy. Next, a force was applied to the pin that was perpendicular to the surface of the thin film metal. until either the bond between the substrate and the thin film broke, or the epoxy bond between the thin film metal and the pin broke. This method often produced results that were inconsistent. The method also required a lengthy sample preparation and failed to produce any meaningful data if the epoxy bond broke first. Additionally, selection of an appropriate epoxy was critical to prevent any reaction with the thin film metal that may have skewed the results.

The above methods of testing the adhesion strength of thin film metals have proven to encompass the disadvantages of lengthy sample preparation times and producing only qualitative results where the strengths must be resolved from other measurements.

A fourth method previously used to measure adhesion strength of thin films is disclosed in Soviet Inventor Certificate SU 1627931A1. A related method is disclosed in Soviet Inventor Certificate SU 1805346A1. The thin film adhesion testers of these two Soviet Inventor Certificates use a probe made of a metal rod having an end face coated with a layer of oxide. The end face of the probe is brought into physical contact with the thin film to be tested. An electric field is then applied which causes the probe and test sample to be forced together with an electrostatic attraction force. Testing then proceeds by using a mechanical pulling apparatus to pull the probe away from the test sample thereby to induce delamination stress on the thin film under test. The prior art approaches of both these Soviet Inventor Certificates have the problem that a mechanical pulling apparatus is required to stress the thin film being tested. The approach of SU 1627931A1 has the additional problem that no quantitative measurement of adhesion strength is possible. The approach of SU 1805346A1 does not have this problem, since a dynamometer is provided. The dynamometer cooperates with the mechanical pulling apparatus to measure the mechanical pulling force at the point of delamination. However, the addition of a dynamometer adds further expense and complexity to the apparatus.

Still further methods are disclosed in Soviet Inventor Certificate SU 1310699A1 and Japanese patent application JP05 099840A1.

It would thus be desirable to have an improved method of testing the adhesion strength of thin film metals.

### SUMMARY OF THE INVENTION

According to a first aspect of the invention there is provided a method of testing the adhesion strength of a thin film conductor formed on a substrate, comprising the steps of:
forming a capacitor by placing a conducting portion of an adhesion tester in close proximity to said thin film conductor, creating a gap therebetween, wherein said conducting portion does not physically contact said thin film conductor;
creating a potential difference between said conducting portion and said thin film conductor, wherein said potential difference creates an electric field across said gap between said conducting portion and said thin film conductor, wherein said electric field induces stress in said thin film conductor, said gap providing a space into which said thin film conductor can be displaced under the action of said electric field in the case that said stress induced by said electric field is sufficient to cause delamination of said thin film conductor; and, after said creating,
determining an electrical parameter of the electric field between said conducting portion and said thin film conductor, wherein said electrical parameter is indicative of said adhesion strength.

The condition of the thin film conductor may be determined by measuring an electrical parameter of said capacitor, wherein said electrical parameter is indicative of said adhesion strength.

According to a second aspect of the invention there is provided a system for testing the adhesion strength of a thin film conductor formed on a substrate, the system comprising:
an adhesion tester comprising a conducting portion, wherein said adhesion tester is constructed so that said conducting portion does not physically contact said thin film conductor when said adhesion tester is applied to said thin film conductor, but leaves a gap therebetween, thereby forming a capacitor;
a power supply having means for coupling to at least one of said adhesion tester and said thin film conductor to create a potential difference between said conducting portion and said thin film conductor, wherein said potential difference creates an electric field across said gap between said conducting portion and said thin film conductor, wherein said electric field induces stress in said thin film conductor, said gap providing a space into which said thin film conductor can be displaced under the action of said electric field in the case that said stress induced by said electric field is sufficient to cause delamination of said thin film conductor; and
a measuring device having means for coupling to at least one of said adhesion tester and said thin film conductor to measure an electrical parameter of said electric field, wherein said electrical parameter is indicative of said adhesion strength.

The adhesion tester may advantageously comprise one or more support portions coupled to the conducting portion, wherein the or each support portion contacts the thin film conductor formed on the substrate when the adhesion tester is applied to the thin film conductor.

The problems outlined above are in large part solved by an electrostatic adhesion tester for thin film conductors according to various aspects and embodiments of the invention.

In one embodiment, a device is provided for testing the adhesion strength of a thin film conductor that has been formed upon a substrate. The device includes an adhesion tester that is primarily comprised of a conducting portion. The conducting portion is applied to the thin film conductor so that it does not physically contact the thin film conductor, but leaves a small space there between. A power supply may further be provided for coupling to either the adhesion tester, the thin film conductor, or both in order to create a potential difference between the conducting portion and the thin film conductor. The potential difference creates an electric field between the conducting portion and the thin film conductor that induces stress in the thin film conductor. A measuring device may also be provided for coupling to the adhesion tester and the thin film conductor in order to measure an electrical parameter of the electric field, which is indicative of the adhesion strength.

The adhesion tester may further be configured to include one or more support portions that are connected to the conducting portion to accurately position the conducting portion in close proximity to the thin film conductor. The power supply mentioned above is adjustable in order to ramp up the potential difference between the conducting portion and the thin film conductor. Adjusting the potential difference controls the electric field between the conducting portion and the thin film conductor, and allows the electric field to be increased to the point where the thin film conductor peels away from the substrate and contacts the conducting portion. A measuring device may be connected to the thin film conductor and the conducting portion to detect the electrical parameter immediately before the thin film conductor contacts the conducting portion. Alternatively, the measuring device may be configured to detect the occurrence of a significant rate of change in the electrical parameter. Typically, both the adhesion tester and the substrate comprising thin film conductor are placed in a vacuum chamber in order to prevent arcing.

A further embodiment contemplates a method of testing the adhesion strength of a thin film conductor that is formed on a substrate. This method comprises the step of forming a capacitor by placing a conducting portion of an adhesion tester in close proximity to the thin film conductor without physically contacting the thin film conductor. A potential difference is then created between the conducting portion and the thin film conductor in order to create a corresponding electric field between the conducting portion and the thin film conductor. An electrical parameter of the capacitor is then measured, where the electrical parameter is indicative of the adhesion strength of the thin film conductor.

Another embodiment contemplates a system for testing the adhesion strength of a thin film conductor formed on a substrate. The system includes an adhesion tester, a power supply, and a measuring device. The adhesion tester includes a conducting portion adapted not to physically contact said thin film conductor when the adhesion tester is applied to said thin film conductor. The power supply is adapted for coupling to the adhesion tester or the thin film conductor and is capable of creating a potential difference between said conducting portion and said thin film conductor. The potential difference creates an electric field between the conducting portion and the thin film conductor. The electric field induces stress in the thin film conductor. The measuring device is adapted for coupling to the adhesion tester or the thin film conductor for measuring an electrical parameter of said electric field. The electrical parameter is indicative of said adhesion strength.

A still further embodiment contemplates a method of testing the adhesion strength of a thin film conductor formed on a substrate, comprising the steps of forming a capacitor. creating a potential difference between a conducting portion of the capacitor and the thin film conductor, and measuring an electrical parameter of the capacitor indicative of the adhesion strength of the thin film conductor. Formation of the capacitor is achieved by placing a conducting portion of an adhesion tester in close proximity to said thin film conductor, wherein said conducting portion does not physically contact said thin film conductor. The potential difference creates an electric field between said conducting portion and said thin film conductor, wherein said electric field induces stress in said thin film conductor.

### BRIEF DESCRIPTION OF THE DRAWINGS

Other objects and advantages of the invention will become apparent upon reading the following detailed description and upon reference to the accompanying drawings, in which:
Fig. 1 is a diagram of electrostatic stresses between two parallel conductor plates;
Fig. 2 is a schematic diagram of an electrostatic adhesion tester;
Fig. 3 is a flow diagram of a method of testing an adhesion strength;
Fig. 4 is a graph of the Weibull distribution of adhesion strengths from three metallizations.
Fig. 5 is a table of the characteristic strengths and Weibull modulus of the tested films;
Fig. 6A is a top view of micro-blister adhesion failure; and
Fig. 6B is a cross section of one of the micro-blisters in 3A.

While the invention is susceptible to various modifications and alternative forms, specific embodiments thereof are shown by way of example in the drawings and will herein be described in detail. It should be understood, however, that the drawing and detailed description thereto are not intended to limit the invention to the particular form disclosed, but on the contrary, the intention is to cover all modifications, equivalents and alternatives.

### DETAILED DESCRIPTION OF THE INVENTION

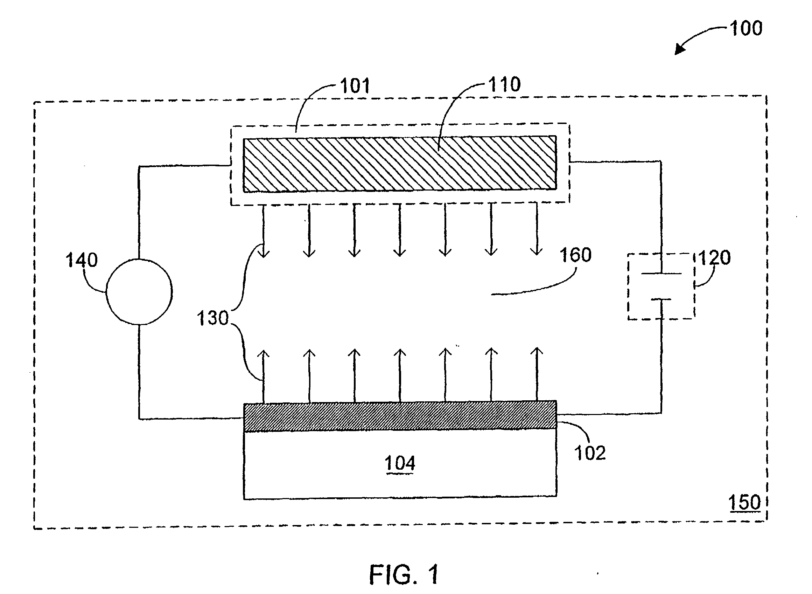

Referring now to Fig. 1. a schematic diagram of the electrostatic stresses between two parallel conductor plates in accordance with one embodiment of the present invention is shown. The principle of this technique is the use of a quantifiable normal tensile force generated by an electrostatic field to delaminate thin film metallizations from their semiconductor substrates. Fig. 1 shows a system 100 for testing the adhesion strength of a thin film metal 102 that is formed on a substrate 104. The thin film metal 102 is coupled to the conducting portion 110 of an adhesion tester 101 by a power supply 120. Power supply 120 is preferably adjustable, and adapted to create a positive charge on the conducting portion 110. The thin film metal 102 may be either negatively charged or grounded. The model for this system is the simple parallel plate capacitor. For a conducting portion 110 with a uniform surface charge density ρ facing a thin film metal 102, which is grounded, according to Gauss's law one can calculate the electric field 160 in the intervening medium as being equal to the surface charge density divided by the product of the permittivity of vacuum and the dielectric constant of the material separating the conducting portion 110 and the thin film metal 102. The dielectric separating the conducting portion and the thin film metal in this particular embodiment is air, which has a relative permittivity of 1.00059. The electric field 160 may further be defined as the resultant electrostatic force per unit positive charge. The electrostatic forces 130 generated on the surfaces of the conducting portion 110 and the thin film metal 102 are normal to the surfaces, hence, the electric field 160 can be represented in a scalar relationship E = F/q. Considering the charge density ρ = q/A and the mechanical stress σ = F/A, the electrostatic field 130 can be further expressed as E = σ/ρ. The relationship between the mechanical stress σ and field E can be represented as σ = κ εₒE².

The electric field 160 in the special case of parallel plate geometry can be simply expressed as the potential or applied voltage V. divided by the plate separation distance. d. Generally speaking. for the case of adhesion testing, the medium is a vacuum which has a permittivity of εₒ =8.85 x 10 ⁻¹² C²/Nm². Hence, the electrostatic stress 130 can be expressed in terms of only an applied voltage and a separation distance as σ(MPa) = 8.85 [(V(kV))/d(µm))]².

It should be noted that the preceding discussion applies not only for metal films deposited on a substrate, but also for other thin conductive films as well. In particular, the adhesion strength of a dielectric film can also be tested using the invention if the dielectric material is exposed to an electric field that causes it to undergo dielectric breakdown. Under this condition, the dielectric film becomes conductive, and the above expression for electrostatic stress can be used to determine the electrostatic stress on the dielectric film.

The feasibility of this technique relies on attaining adequately high values of E and, hence, σ. To generate stresses of up to 100 Mpa in the metallizations. the electric field 160 should preferably be on the order of approximately 10⁹ V/m. The measuring device 140 is used to measure an electrical parameter of the electric field 160. The simplest measurement to record is the potential difference between the conducting portion 110 and the thin film metal 102.

To generate a stress as high as 100 Mpa using a power supply with a maximum output of about 10kV, the separation distance between the conducting portion 110 and the thin fillm metal 102 should preferably be on the order of microns. Hence, it is typically more practical to control the electric field by adjusting the relatively large voltage rather than the relatively small gap.

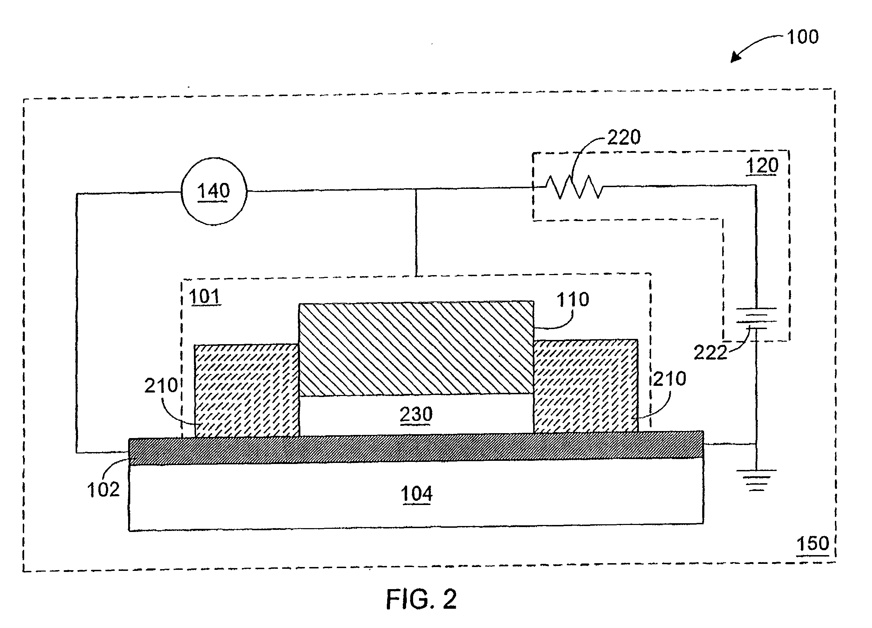

Fig. 2 is a schematic diagram of an embodiment of an electrostatic adhesion test system 100. Test system 100 includes an adhesion tester 101, a power supply 120, and a measuring device 140. Adhesion tester 101 includes two ceramic supports 210 connected to the conducting portion 110. The conducting portion 110 is typically comprised of copper and is approximately 0.65mm thick in one embodiment. The adhesion tester 101, consisting of the two ceramic supports 210 and the copper conducting portion 110 there between, is applied to the thin film metal 102 such that the ceramic supports 210 are in contact with thin film metal 102.

In one presently preferred embodiment, the contact surfaces of the ceramic supports 210 are comprised of finely polished µm alumina. Ceramic supports 210 hold the conducting portion 110 in such a way as to prevent conducting portion 110 from contacting thin film metal 102. The conducting portion 110 is held in close proximity to thin film metal 102, creating a gap between the two of approximately 2 µm. This gap may suitably be filled with a variety of dielectrics including air. Suitable dimensions of ceramic supports 210 and the copper conducting portion are approximately 7 x 10 x 8 mm.

An alternate method (not shown) of applying conducting portion 110 to thin film metal 102 is to connect conducting portion 110 to a mechanical arm that positions the surface of the conducting portion 110 parallel to the surface of the thin film metal 102. The mechanical arm could thereby leave a small gap of approximately 2 µm between the two surfaces without the need of any support portions, such as those shown in Fig. 2.

To prevent arcing, the device is placed in a vacuum chamber 150. In one embodiment a diffusion pump backed up by a mechanical pump provides a vacuum of 10⁻⁶ torr, which is adequate for the proper operation of the device. A cold trap may be used to diminish oil contamination of the sample. Also, the edges of the copper conducting portion 110 may be gently rounded to further prevent arcing.

The potential difference between the conducting portion 110 and the thin film metal 102 may be provided by applying a voltage from a power supply 120. In the preferred embodiment, power supply 120 includes a voltage source 222 in series with a resistor 220 An exemplary power supply is a Sorensen-5 voltage source, whose maximum voltage is 12 kV at a current of 50 mA. The measuring device 140 is intended to measure an electrical parameter of the electric field between the conducting portion 110 and the thin film metal 102. For example, measuring device 140 could measure the capacitance or the potential difference between the two surfaces. The simplest measurement to record is the potential difference or voltage. An exemplary device to measure the exact applied voltage from the power supply 120 is a BK Precision multimeter (Model: 2835 DMM). The resistor 220 used in this invention is typically a 50 Ω resistor. In testing a specimen, the electric field is raised gradually by increasing the voltage until a short is noticed. This is the point at which the thin film metal 102 contacts the conducting portion 110. The voltage at failure is read on the voltmeter and used to determine the delamination stress of the thin film metal 110.

Between sets of experiments, the adhesion tester 101 is cleaned and polished to prevent particle accumulation. Changes in the gap between the conducting portion 110 and the thin film metal 102 are measured by scanning electron microscopy and incorporated into the necessary calculations. Generally speaking, gaps from 1.2 to 4 µm are utilized.

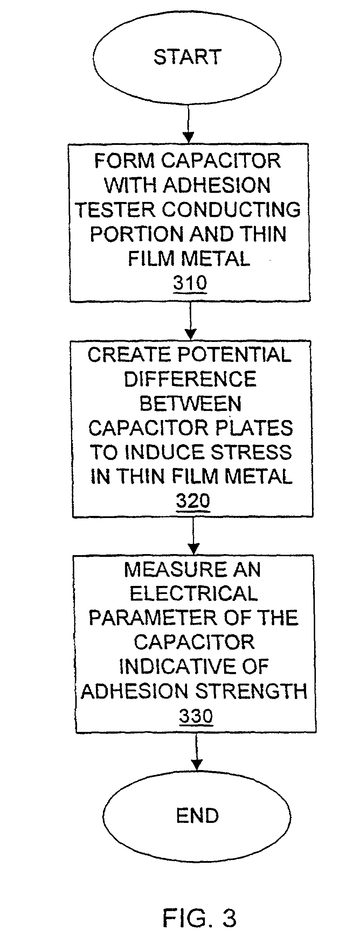

In Fig. 3, a flow diagram for one embodiment of a method for testing the adhesion strength of a thin film metal is disclosed. Initially, a capacitor is formed as indicated by reference numeral 310. The formation of the capacitor is accomplished by placing a conducting portion of the adhesion tester in close proximity to the thin film metal without contacting the conducting portion to the thin film metal. In a presently preferred embodiment. a gap between the conducting portion and the thin film metal is suitably in the range of approximately 1 to 4 microns. After the capacitor has been formed, a potential difference between the plates of the capacitor is created as indicated in reference numeral 320 of Fig. 3. The potential difference between the plates of the capacitor creates an electrical field that induces stress in the thin film metal. After the potential difference has been created, an electrical parameter of the capacitor is measured. The electrical parameter chosen for measurement is indicative of the adhesion strength of the thin film metal. The measurement of the electrical parameter is indicated in Fig. 3 by reference numeral 330. In one embodiment. the adhesion tester includes one or more support structures coupled to the conducting portion to facilitate placing the conducting portion in close proximity to the thin film metal without touching the thin film metal. In one embodiment, the method further includes the step (not shown in Fig. 3) of adjusting the potential difference between the conducting portion and the thin film metal during the measuring. In this manner, the electrical field between the conducting portion and the thin film metal may be controlled during the measurement portion of the method. In one embodiment. the adjusting involves increasing the potential difference until the thin film metal contacts the conducting portion of the adhesion tester. In this embodiment. the measuring preferably determines a value of the electrical parameter immediately prior to a point when the thin film metal contacts the conductive portion. It is contemplated in this embodiment that the increasing electrical field caused by the increasing potential difference ultimately induces enough stress in the thin film metal to displace the thin film metal from the underlying substrate and, ultimately, forces the thin film metal into contact with the conducting portion of the adhesion tester. In one embodiment, it is contemplated that the potential difference between the conducting portion and the thin film metal results in a first rate of change in the electrical parameter during a first duration. During a second duration, the measuring detects a second rate of change typically greater than the first rate of change. In this embodiment, the measuring determines the value of the electrical parameter immediately after the first duration. In this embodiment, it is contemplated that, prior to the point at which the thin film metal delaminates, a rate of change in the measured electrical parameter whether it be potential difference. capacitance, capacitor current, or some other appropriate parameter, will be significantly different than the rate of change of the particular parameter after the delamination of the metal and, more particularly, after the point at which the thin film metal contacts the conducting portion of the adhesion tester. It is contemplated that one embodiment of the present invention may be designed to measure the rate of change of a desired electrical parameter rather than measuring and reporting the electrical parameter directly.

In one embodiment, creating the potential difference is accomplished by applying a voltage to the conducting portion, the thin film metal, or both. The voltage creates an electric field between the conducting portion and the thin film metal that induces a stress in the thin film metal. The creation of the potential difference is preferably accomplished in a presently preferred embodiment by connecting a power supply across the thin film metal and the conducting portion of the adhesion tester. In a preferred embodiment, the adhesion tester and the substrate are placed in a vacuum chamber prior to performing the adhesion test to prevent arcing. In one embodiment the electrical parameter is measured at a predetermined time interval after the potential difference is created. In this embodiment, it is envisioned that a pass fail test may be performed by simply measuring an electrical parameter at a specified time interval and, if the measured parameter is within specification. the thin film is designated to have adequate adhesion to the substrate. In alternative embodiments, the electrical parameter may be the potential difference between the conducting portion and the thin film metal or a capacitance of the capacitor comprising the conducting portion and the thin film metal. In a presently preferred embodiment, the potential difference is in the range of approximately 1 kV to 12 kV.

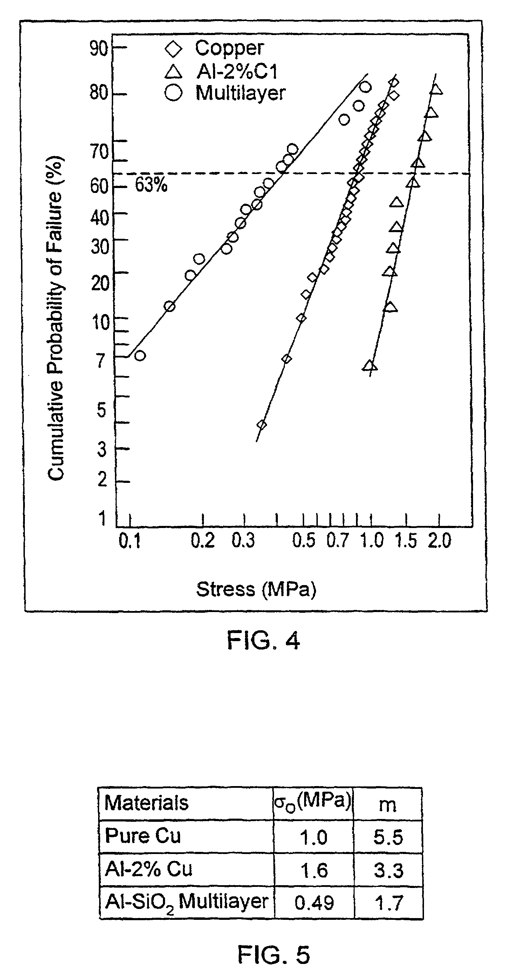

Fig. 4 is a plot of the Weibull distribution of adhesion strengths from the following metallizations: aluminum-copper (2%) alloy, unalloyed copper, and an aluminum silica multilayer. The three metallizations were 1 µm thick and had been de magnetron sputtered onto a partially oxidized single-crystal silicon substrate. The electrostatic adhesion test system typically measures adhesion strengths that exhibit considerable scatter and should consequently be subjected to Weibull statistical analysis.

Taking the natural logs of the Weibuil distribution function (σₒ = 0) twice gives In In[1/(1-P_{f}(V))]= m In (σ/σₒ) with σₒ being the characteristic stress defined as the stress at which 63% of the population has failed. In the previous equation, m is the Weibull modulus indicative of flaw-sensitivity. Thus a plot of the left-hand side of the equation against ln(σ) is a straight line. The slope of the line is m and the x -intercept is ln(σₒ). The Weibull plots in Fig. 3 point to a linear relationship, indicating that the Weibull statistics can be applied to the adhesion strengths analysis.

Fig. 5 lists the characteristic strength. σₒ, and the Weibull modulus, m. for each of the metallizations. It is seen from this Fig. that the Al-Cu(2%) alloy metallization has a higher characteristic adhesion strength than the other two metallizations. The Al multilayer film has the lowest characteristic strength. At the same time, the Weibull modulus of the Al-Cu(2%) metallization is larger than those of copper and of the Almultilayer. Thus, there is less scattering of the delamination stress in the Al-Cu(2%) metallization than that in the other two metallizations.

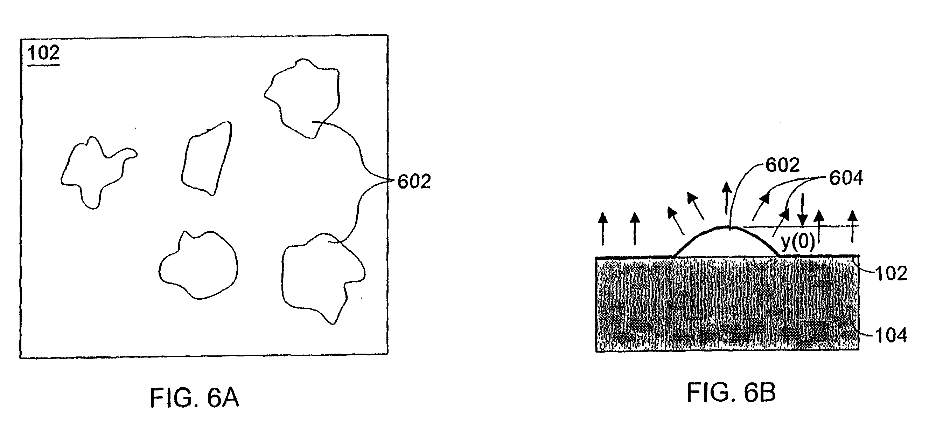

Figs. 6A and 6B illustrate the delamination of a thin film metal 102 as it occurs through blister formation. The blister 602 may be viewed with the use of a field-emission scanning electron microscope (FE-SEM). The size of the blisters 602 are typically about 15 µm in diameter. The electrostatic forces 604 cause the central part of the blister 602 to rupture, and thus make contact with the conducting portion 110 of the adhesion tester 101. Fig. 6B also shows the blister 602 growing under the electrostatic field.

The delamination and rupture of a thin film metal 102 occurs as a result of the electrostatic field gradually increasing. This increase in the electrostatic field causes the normal stress to lift the film 102 from its substrate 104 at an interfacial flaw. which provides a potential delamination site. When the critical delamination stress is reached, a region at the flaw is detached forming a blister 602. The blister 602 will grow spontaneously, without the need of a field stress greater than the critical delamination stress. The meridional tensile stresses in the film will also rise. When these stresses reach the fracture strength of the film 102, parts of the film 102 are delaminated and touch the conducting portion 110 of the adhesion tester 101, thus creating a short

The delamination flaws at the interface could be voids, interface contaminations, grain boundaries, or interfacial chemical reactants. If more than two kinds of flaws were active in initiating fractures, the measured data would fall on a non-linear relationship in the Weibull plots. A "knee" would appear between linear portions of the graph with different slopes. However, all of the plots in Fig. 4 show a clearly linear relationship.

For the blisters 602 shown in Figs. 6A and 6B, the stresses reach a maximum at the center of the blister. For a typical aluminum film blister, the tensile stress is calculated to be approximately 83 MPa. This stress is higher than the rupture strength of 55MPa, which is measured from blister testing of free standing Al(1%)Si film of the same thickness. For comparison, the ultimate tensile strength of bulk aluminum (1100) is 89 MPa. The thin film metal 102 is ruptured when the tensile stress at the center of the blister 602 reaches the fracture strength of the material. The ruptured film then creates a short by touching the conducting portion 110 of the adhesion tester 101.

The lower limit of the central height of a typical blister 602 is 0.34 µm. Likewise, the upper limit of the central height of a typical blister 602 is 1 µm. Because the blister growth in adhesion testing is a much faster process than that in a bulge test the fracture strain is expected to be smaller than that in a bulge test and. hence, the central height of a blister will be smaller than the calculated value.

As mentioned above, measuring the potential difference between the conducting portion 110 and the thin film metal 102 is the preferred method of determining the adhesion strength of the thin film metal 102. However, alternate methods may be used. One of the alternate methods is to use measuring device 140 to determine when the electric field between the conducting portion 110 and the thin film metal 102 undergoes a significant rate of change. The increase in the rate of change of the electric field is easily detected because the time from when the thin film metal 102 first begins to blister to the point where it expands and contacts the conducting portion 110 is extremely short and in the order of micro seconds. This is much different from the slow and predictable rate of change that results from the power supply being steadily ramped up to the point where the short circuit is noticed. Therefore, it is quite easy to differentiate between the two rates of change and the measuring device could be designed accordingly.

Another alternate method of determining the adhesion strength between the thin film metal 102 and the substrate 104 is to create a pre-determined potential difference between the conducting portion 110 and the thin film metal 102 for a pre-determined period of time, and then visually inspect the sample to determine if any delamination in the form of blistering occurred. In other words, if the sample is subjected to a pre-determined level of stress from an electric field, and no delamination occurs. then the adhesion strength could be considered adequate, having passed a threshold test.

It will be appreciated by those skilled in the art that the present invention and the preferred embodiment of the invention described herein are useful in obtaining quantitative information regarding the adhesion strengths of thin film metals.

## Claims

1. A method of testing the adhesion strength of a thin film conductor formed on a substrate, comprising the steps of:
forming (310) a capacitor by placing a conducting portion of an adhesion tester in close proximity to said thin film conductor, creating a gap therebetween, wherein said conducting portion does not physically contact said thin film conductor;
creating (320) a potential difference between said conducting portion and said thin film conductor, wherein said potential difference creates an electric field across said gap between said conducting portion and said thin film conductor, wherein said electric field induces stress in said thin film conductor, said gap providing a space into which said thin film conductor can be displaced under the action of said electric field in the case that said stress induced by said electric field is sufficient to cause delamination of said thin film conductor; and, after said creating,
determining (330) an electrical parameter of the electric field between said conducting portion and said thin film conductor, wherein said electrical parameter is indicative of said adhesion strength.

2. The method of claim 1, wherein said creating said potential difference comprises applying said potential difference for a pre-determined period of time.

3. The method of claim 1 or 2, wherein said adhesion tester further comprises one or more support portions coupled to said conducting portion, wherein said placing said conducting portion comprises applying said adhesion tester to said thin film conductor wherein said one or more support portions contact said thin film conductor.

4. The method of claim 3, wherein, after said applying of said adhesion tester to said thin film conductor, said conducting portion does not physically contact said thin film conductor, but leaves said gap therebetween.

5. The method of any preceding claim, wherein said creating a potential difference comprises applying a voltage to at least one of said conducting portion and said thin film conductor, wherein said voltage creates said electric field across said gap between said conducting portion and said thin film conductor.

6. The method of claim 5, wherein said creating a potential difference between said conducting portion and said thin film conductor comprises connecting a power supply to said conducting portion and to said thin film conductor.

7. The method of any preceding claim, further comprising:
placing said substrate in a vacuum chamber;
wherein said steps of placing said conducting portion, creating a potential difference, and determining the electrical parameter are performed under vacuum in said vacuum chamber to prevent arcing.

8. The method of any preceding claim, wherein, after said forming, said gap between said conducting portion and said thin film conductor is filled with a dielectric to form a dielectric gap into which said thin film conductor can be peeled away from said substrate under the action of the stress induced by said electric field.

9. The method of claim 8, wherein said dielectric is air.

10. The method of any preceding claim wherein said potential difference is in the range of 1kV to 12kV.

11. The method of any preceding claim wherein, after said forming, said gap is defined by a distance ranging from 1.2 to 4 micrometers.

12. The method of any preceding claim, wherein said electrical parameter is an electrical parameter of said capacitor.

13. The method of claim 12, further comprising:
adjusting said potential difference between said conducting portion and said thin film conductor during said measuring, to control said electric field across said gap created between said conducting portion and said thin film conductor.

14. The method of claim 13, wherein said adjusting said potential difference between said conducting portion and said thin film conductor comprises increasing said potential difference and thus said electric field until said thin film conductor peels away from said substrate into the gap under the action of said stress induced by said electric field and contacts said conducting portion.

15. The method of claim 14, wherein said measuring determines a value of said electrical parameter immediately prior to a point where said thin film conductor contacts said conducting portion.

16. The method of claim 13, wherein said adjusting said potential difference between said conducting portion and said thin film conductor results in a first rate of change in said electrical parameter during a first duration;
further wherein said measuring detects a second rate of change during a second duration, wherein said second rate of change is greater than said first rate of change; and
further wherein said measuring further determines said electrical parameter immediately after the first duration.

17. The method of any one of claims 12 to 16, wherein said electric field acts to induce thin film conductor delamination, wherein said measuring an electrical parameter is performed at a pre-determined time interval after said creating.

18. The method of any one of claims 12 to 17, wherein said electrical parameter is a potential difference between said conducting portion and said thin film conductor.

19. The method of any one of claims 12 to 18, wherein said electrical parameter is a capacitance between said conducting portion and said thin film conductor.

20. The method of any one of claims 12 to 19, wherein said measuring comprises measuring a rate of change of said electrical parameter.

21. A system for testing the adhesion strength of a thin film conductor (102) formed on a substrate (104), the system comprising:
an adhesion tester (101) comprising a conducting portion (110), wherein said adhesion tester is constructed so that said conducting portion does not physically contact said thin film conductor when said adhesion tester is applied to said thin film conductor, but leaves a gap therebetween, thereby forming a capacitor;
a power supply (120) having means for coupling to at least one of said adhesion tester and said thin film conductor to create a potential difference between said conducting portion and said thin film conductor, wherein said potential difference creates an electric field across said gap between said conducting portion and said thin film conductor, wherein said electric field induces stress in said thin film conductor, said gap providing a space into which said thin film conductor can be displaced under the action of said electric field in the case that said stress induced by said electric field is sufficient to cause delamination of said thin film conductor; and
a measuring device (140) having means for coupling to at least one of said adhesion tester and said thin film conductor to measure an electrical parameter of said electric field, wherein said electrical parameter is indicative of said adhesion strength.

22. The system of claim 21, wherein said adhesion tester further comprises one or more support portions (210) coupled to said conducting portion, wherein said one or more support portions contact said thin film conductor formed on said substrate when said adhesion tester is applied to said thin film conductor.

23. The system of claim 22, wherein said one or more support portions are constructed to contact said thin film conductor when said adhesion tester is applied to said thin film conductor so that said conducting portion does not physically contact said thin film conductor but is spaced apart from said thin film conductor to leave said gap therebetween.

24. The system of claim 21, 22 or 23, wherein, when said adhesion tester is applied to said thin film conductor, said conducting portion operates as a first plate of a capacitor and said thin film conductor operates as a second plate of said capacitor, said first and second plates being separated by said gap.

25. The system of any one of claims 21 to 24, wherein said power supply is adjustable.

26. The system of claim 25, wherein said power supply is operable to increase said potential difference and thus said electric field across said gap between said conducting portion and said thin film conductor until said measuring device, through measuring of said electrical parameter, senses that said thin film conductor has peeled away from said substrate into the gap under the action of the stress induced by said electric field and contacted said conducting portion; and
wherein said measuring device is operable to detect said electrical parameter immediately prior to when said thin film conductor contacts said conducting portion.

27. The system of claim 25, wherein said power supply is operable to adjust said potential difference between said conducting portion and said thin film conductor to produce a first rate of change in said electrical parameter during a first duration;
and further wherein said measuring device is operable to detect a second rate of change during a second duration, wherein said second rate of change is greater than said first rate of change; and
further wherein said measuring device is operable to determine said electrical parameter immediately prior to occurrence of said second rate of change.

28. The system of any one of claims 21 to 27, wherein said conducting portion forms a first plate of a capacitor, wherein said thin film conductor forms a second plate of said capacitor, said first and second plates being separated by said gap;
wherein said power supply is operable to create a potential difference between said first and second plates of said capacitor, wherein said potential difference creates an electric field across said gap between said first and second plates; and
wherein said measuring device is operable to measure an electrical parameter of said capacitor, wherein said electrical parameter is indicative of said adhesion strength.

29. The system of any one of claims 21 to 28, wherein said power supply is operable to apply a voltage to at least one of said conducting portion and said thin film conductor, wherein said voltage creates an electric field across said gap between said conducting portion and said thin film conductor, wherein said electric field induces stress in said thin film conductor.

30. The system of any one of claims 21 to 29, further comprising:
a vacuum chamber (150) configured to receive said substrate;
wherein said adhesion tester is positionable in said vacuum chamber when said adhesion tester is applied to said thin film conductor; and
wherein said measuring device is operable to measure said electrical parameter of said electric field under vacuum in said vacuum chamber in order to prevent arcing.

31. The system of any one of claims 21 to 30, wherein said power supply is operable to create said electric field so as to induce thin film conductor delamination, wherein said measuring device is operable to measure said electrical parameter at a time after said potential difference creates said electric field, to establish whether delamination has occurred.

32. The system of any one of claims 21 to 31, wherein said electrical parameter is a potential difference between said conducting portion and said thin film conductor.

33. The system of any one of claims 21 to 32, wherein said electrical parameter is a capacitance between said conducting portion and said thin film conductor.

34. The system of any one of claims 21 to 33, wherein said measuring device is operable to measure a rate of change of said electrical parameter.

35. The system of any one of claims 21 to 34, further comprising:
a dielectric positioned in said gap between said conducting portion and said thin film conductor to form a dielectric gap into which said thin film conductor can be peeled away from said substrate under the action of said stress induced by said electric field.

36. The system of claim 35, wherein said dielectric is air.

37. The system of any one of claims 21 to 36, wherein said potential difference is in the range of 1kV to 12kV.

## Patentansprüche

1. Verfahren zum Testen der Haftfestigkeit eines elektrischen Leiters in Form eines dünnen Films (Dünnfilmleiter), der auf einem Substrat ausgebildet ist, mit den Schritten:
Ausbilden (310) eines Kondensators, in dem ein leitfähiger Abschnitt eines Haftmitteltesters in dichtem Abstand zu dem Dünnfilmleiter angeordnet wird, wodurch eine Lücke dazwischen erzeugt wird, wobei der leitfähige Abschnitt nicht in körperlichen Kontakt mit dem Dünnfilmleiter kommt,
Erzeugen (320) einer Potentialdifferenz zwischen dem leitfähigen Abschnitt und dem Dünnfilmleiter, wobei die Potentialdifferenz ein elektrisches Feld über die Lücke hinweg zwischen dem leitfähigen Abschnitt und dem Dünnfilmleiter erzeugt, wobei das elektrische Feld eine Spannung in dem Dünnfilmleiter hervorruft, wobei die Lücke einen Raum erzeugt, in welchem der Dünnfilmleiter unter der Wirkung des elektrischen Feldes verschoben werden kann, für den Fall, daß die durch das elektrische Feld erzeugte Spannung ausreichend ist, um eine Delaminierung des Dünnfilmleiters zu bewirken, und, nachdem dieses Potential erzeugt worden ist,
Bestimmen (330) eines elektrischen Parameters des elektrischen Feldes zwischen dem leitfähigen Abschnitt und dem Dünnfilmleiter, wobei der elektrische Parameter die Haftfähigkeit bzw. Haftfestigkeit anzeigt.

2. Verfahren nach Anspruch 1, wobei das Erzeugen der Potentialdifferenz das Anlegen der Potentialdifferenz für eine vorbestimmte Zeitdauer umfaßt.

3. Verfahren nach Anspruch 1 oder 2, wobei der Haftfähigkeitstester weiterhin ein oder mehrere Halterungsabschnitte aufweist, die mit dem leitfähigen Abschnitt verbunden sind, wobei das Anordnen des leitfähigen Abschnittes und das Anlegen des Haftfähigkeitstesters an den Dünnfilmleiter aufweist, wobei einer oder mehrere Stützabschnitte mit dem Dünnfilmleiter in Kontakt treten.

4. Verfahren nach Anspruch 3, wobei nach dem Anlegen des Haftfähigkeitstesters an den Dünnfilmleiter der leitfähige Abschnitt nicht in körperlichen Kontakt mit dem Dünnfilmleiter tritt, sondern eine Lücke zu jenem läßt.

5. Verfahren nach einem der vorstehenden Ansprüche, wobei das Erzeugen einer Potentialdifferenz das Anlegen einer Spannung an zumindest einem, nämlich dem leitfähigen Abschnitt und dem Dünnfilmleiter aufweist, wobei die Spannung das elektrische Feld über die Lücke hinweg zwischen dem leitfähigen Abschnitt und dem Dünnfilmleiter erzeugt.

6. Verfahren nach Anspruch 5, wobei das Erzeugen einer Potentialdifferenz zwischen dem Leitfähigkeitsabschnitt und dem Dünnfilmleiter das Verbinden einer Strom- bzw. Spannungsversorgung mit dem leitfähigen Abschnitt und dem Dünnfilmleiter aufweist.

7. Verfahren nach einem der vorstehenden Ansprüche, welches weiterhin aufweist:
Anordnen des Substrates in einer Vakuumkammer,
wobei die Schritte des Anordnens des Leiffähigkeitsabschnittes, des Erzeugens einer Potentialdifferenz und des Bestimmens des elektrischen Parameters in der Vakuumkammer unter Vakuum durchgeführt werden, um eine Lichtbogenbildung zu vermeiden.

8. Verfahren nach einem der vorstehenden Ansprüche, wobei nach dem erwähnten Ausbilden (eines Kondensators) die Lücke zwischen dem Leitfähigkeitsabschnitt und dem Dünnfilmleiter mit einem Dielektrikum gefüllt wird, um eine dielektrische Lücke zu bilden, in welche der Dünnfilmleiter unter der Wirkung der von dem elektrischen Feld induzierten Spannung von dem Substrat abgeschält werden kann.

9. Verfahren nach Anspruch 8, wobei das Dielektrikum Luft ist.

10. Verfahren nach einem der vorstehenden Ansprüche, wobei die Potentialdifferenz in dem Bereich von 1 kV bis 10kV liegt.

11. Verfahren nach einem der vorstehenden Ansprüche, wobei nach dem Ausbilden die Lücke durch einen Abstand definiert ist, der im Bereich von 1,2 bis 4 Mikrometer liegt.

12. Verfahren nach einem der vorstehenden Ansprüche, wobei der elektrische Parameter ein elektrischer Parameter des Kondensators ist.

13. Verfahren nach Anspruch 12, welches weiterhin aufweist:
Einstellen der Potentialdifferenz zwischen dem Leiffähigkeitsabschnitt und dem Dünnfilmleiter während des Messens, um das elektrische Feld zu steuern bzw. zu regeln, welches zwischen dem Leitfähigkeitsabschnitt und dem Dünnfilmleiter erzeugt wird.

14. Verfahren nach Anspruch 13, wobei das Einstellen der Potentialdifferenz zwischen dem Leitfähigkeitsabschnitt und dem Dünnfilmleiter das Erhöhen der Potentialdifferenz und damit des elektrischen Feldes aufweist, bis der Dünnfilmleiter sich unter der Wirkung der Spannung, welche durch das elektrische Feld erzeugt wird, von dem Substrat abschält und in die Lücke hineinbewegt, und den Leitfähigkeitsabschnitt berührt.

15. Verfahren nach Anspruch 14, wobei das Messen einen Wert des elektrischen Parameters unmittelbar vor einem Punkt bestimmt, in welchem der Dünnfilmleiter mit dem Leitfähigkeitsabschnitt Kontakt aufnimmt.

16. Verfahren nach Anspruch 13, wobei das Einstellen der Potentialdifferenz zwischen dem Leitfähigkeitsabschnitt und dem Dünnfilmleiter während einer ersten Zeitdauer zu einer ersten Änderungsrate des elektrischen Parameters führt,
wobei weiterhin das Messen eine zweite Änderungsrate während einer zweiten Zeitdauer detektiert, wobei die zweite Änderungsrate größer als die erste Änderungsrate ist, und
wobei weiterhin das Messen auch den elektrischen Parameter nach der ersten Zeitdauer bestimmt.

17. Verfahren nach einem der Ansprüche 12 bis 16, wobei das elektrische Feld so wirkt, daß es eine Delaminierung des Dünnfilmleiters induziert, wobei das Messen eines elektrischen Parameters zu einem vorbestimmten Zeitintervall nach dem Erzeugen (der Potentialdifferenz) durchgeführt wird.

18. Verfahren nach einem der Ansprüche 12 bis 17, wobei der elektrische Parameter eine Potentialdifferenz zwischen dem Leitfähigkeitsabschnitt und dem Dünnfilmleiter ist.

19. Verfahren nach einem der Ansprüche 12 bis 18, wobei der elektrische Parameter eine Kapa zität zwischen dem leitfähigen Abschnitt und dem Dünnfilmleiter ist.

20. Verfahren nach einem der Ansprüche 12 bis 19, wobei das Messen das Messen einer Änderungsrate des elektrischen Parameters umfaßt.

21. System zum Testen der Haftfestigkeit eines Dünnfilmleiters (102), welcher auf einem Substrat (104) ausgebildet ist, wobei das Verfahren aufweist:
einen Haftfähigkeitstester (101), der einen leitfähigen Abschnitt (110) aufweist, wobei der Haftfähigkeitstester so aufgebaut ist, daß der leitfähige Abschnitt nicht körperlich mit dem Dünnfilmleiter in Kontakt tritt, wenn der Haftfähigkeitstester auf den Dünnfilmleiter angewendet wird, sondern eine Lücke zu jenem läßt und dadurch einen Kondensator bildet,
eine Spannungsversorgung (120), die eine Einrichtung zum Verbinden mindestens mit entweder dem Haftfähigkeitstester oder dem Dünnfilmleiter aufweist, um zwischen dem leitfähigen Abschnitt und dem Dünnfilmleiter eine Potentialdifferenz zu erzeugen, wobei die Potentialdifferenz ein elektrisches Feld über die Lücke hinweg zwischen dem leitfähigen Abschnitt und dem Dünnfilmleiter erzeugt, wobei das elektrische Feld in dem Dünnfilmleiter eine Spannung hervorruft, die Lücke einen Zwischenraum bereitstellt, in welchen der Dünnfilmleiter unter der Wirkung des elektrischen Feldes verschoben werden kann für den Fall, daß die durch das elektrische Feld induzierte Spannung ausreichend ist, um eine Delaminierung des Dünnfilmleiters zu bewirken, und
eine Meßeinrichtung (140), die Einrichtungen für die Verbindung zumindest zu einem, nämlich dem Haftfähigkeitstester oder dem Dünnfilmleiter hat, um einen elektrischen Parameter des elektrischen Feldes zu messen, wobei der elektrische Parameter die Haftstärke anzeigt.

22. System nach Anspruch 21, wobei der Haftfähigkeitstester weiterhin einen oder mehrere Stützabschnitte (210) aufweist, die mit dem leitfähigen Abschnitt verbunden sind, wobei der eine oder die mehreren Stützabschnitte mit dem auf dem Substrat ausgebildeten Dünnfilmleiter in Kontakt treten, wenn der Haftfähigkeitstester auf den Dünnfilmleiter angewendet bzw. angelegt wird.

23. System nach Anspruch 22, wobei der eine oder die mehreren Stützabschnitte so aufgebaut sind, daß sie mit dem Dünnfilmleiter in Kontakt treten, wenn der Haftfähigkeitstester auf den Dünnfilmleiter angewendet wird, so daß der leitfähige Abschnitt nicht mit dem Dünnfilmleiter in körperlichen Kontakt kommt, sondern von dem Dünnfilmleiter räumlich beabstandet bleibt, um die Lücke zu diesem zu lassen.

24. System nach Anspruch 21, 22 oder 23, wobei dann, wenn der Haftfähigkeitstester auf den Dünnfilmleiter angewendet wird, der Leitfähigkeitsabschnitt als eine erste Platte eines Kondensators und der Dünnfilmleiter als eine zweite Platte des Kondensators wirkt, wobei die ersten und zweiten Platten durch eine Lücke voneinander getrennt sind.

25. System nach einem der Ansprüche 21 bis 24, wobei die Spannungsversorgung einstellbar ist.

26. System nach Anspruch 25, wobei die Spannungsversorgung so betreibbar ist, daß die Potentialdifferenz und damit das elektrische Feld über der Lücke zwischen dem leitfähigen Abschnitt und dem Dünnfilmleiter erhöht wird, bis die Meßeinrichtung durch Messen des elektrischen Parameters erfaßt, daß sich der Dünnfilmleiter unter der Wirkung der durch das elektrische Feld erzeugten Spannung von dem Substrat abgeschält und in die Lücke hineinbewegt hat und den leitfähigen Abschnitt kontaktiert hat, und
wobei die Meßeinrichtung so betreibbar ist, daß sie den elektrischen Parameter erfaßt unmittelbar bevor der Dünnfilmleiter mit dem leitfähigen Abschnitt in Kontakt tritt.

27. System nach Anspruch 25, wobei die Spannungsversorgung so betreibbar ist, daß sie die Spannungsdifferenz zwischen dem leitfähigen Abschnitt und dem Dünnfilmleiter so einstellt, daß während einer ersten Zeitdauer eine erste Änderungsrate in dem elektrischen Parameter erzeugt wird,
und wobei weiterhin die Meßeinrichtung so betreibbar ist, daß sie eine zweite Änderungsrate während einer zweiten Zeitdauer erfaßt, wobei die zweite Änderungsrate größer als die erste Änderungsrate ist, und
wobei weiterhin die Meßeinrichtung so betreibbar ist, daß sie den elektrischen Parameter unmittelbar vor dem Auftreten der zweiten Änderungsrate bestimmt.

28. System nach einem der Ansprüche 21 bis 27, wobei der leitfähige Abschnitt eine erste Platte eines Kondensators bildet, wobei der Dünnfilmleiter eine zweite Platte des Kondensators bildet und wobei die ersten und zweiten Platten durch die Lücke getrennt sind,
wobei die Spannungsversorgung so betreibbar ist, daß sie eine Potentialdifferenz zwischen den ersten und zweiten Platten des Kondensators erzeugen, wobei die Potentialdifferenz ein elektrisches Feld in der Lücke zwischen den ersten und zweiten Platten erzeugt, und
wobei die Meßeinrichtung so betreibbar ist, daß sie einen elektrischen Parameter des Kondensators mißt, wobei der elektrische Parameter die Haftfestigkeit bzw. Haftstärke anzeigt.

29. System nach einem der Ansprüche 21 bis 28, wobei die Spannungsversorgung so betreibbar ist, daß sie eine Spannung an zumindest einem, nämlich dem leitfähigen Abschnitt und dem Dünnfilmleiter anlegt, wobei die Spannung ein elektrisches Feld in der Lücke zwischen dem leitfähigen Abschnitt und dem Dünnfilmleiter erzeugt, wobei das elektrische Feld in dem Dünnfilmleiter eine Spannung induziert.

30. System nach einem der Ansprüche 21 bis 29, welches weiterhin aufweist:
eine Vakuumkammer (150), die dafür ausgestaltet ist, das Substrat aufzunehmen,
wobei der Haftfähigkeitstester in der Vakuumkammer positionierbar ist, wenn der Haftfähigkeitstester an dem Dünnfilmleiter angelegt wird, und
wobei die Meßeinrichtung so betreibbar ist, daß sie den elektrischen Parameter des elektrischen Feldes unter Vakuum in der Vakuumkammer mißt, um eine Lichtbogenbildung zu vermeiden.

31. System nach einem der Ansprüche 21 bis 30, wobei die Spannungsversorgung so betreibbar ist, daß sie das elektrische Feld erzeugt, damit es eine Delaminierung des Dünnfilmleiters induziert, wobei die Meßeinrichtung so betreibbar ist, daß sie den elektrischen Parameter zu einem Zeitpunkt mißt, nachdem die Potentialdifferenz das elektrische Feld erzeugt hat, um festzustellen, ob eine Delaminierung aufgetreten ist.

32. System nach einem der Ansprüche 21 bis 31, wobei der elektrische Parameter eine Potentialdifferenz zwischen dem Leitfähigkeitsabschnitt und dem Dünnfilmleiter ist.

33. System nach einem der Ansprüche 21 bis 32, wobei der elektrische Parameter eine Kapazität zwischen dem Leitfähigkeitsabschnitt und dem Dünnfilmleiter ist.

34. System nach einem der Ansprüche 21 bis 33, wobei die Meßeinrichtung so betreibbar ist, daß sie eine Änderungsrate des elektrischen Parameters mißt.

35. System nach einem der Ansprüche 31 bis 34, welches weiterhin aufweist:
ein in der Lücke zwischen dem leitfähigen Abschnitt und dem Dünnfilmleiter angeordnetes Dielektrikum, um einen dielektrischen Spalt zu bilden, innerhalb dessen der Dünnfilmleiter unter der Wirkung der durch das elektrische Feld erzeugten Spannung von dem Substrat abgeschält werden kann.

36. System nach Anspruch 35, wobei das Dielektrikum Luft ist.

37. System nach einem der Ansprüche 21 bis 36, wobei die Potentialdifferenz im Bereich von 1 kV bis 12 kV liegt.

## Revendications

1. Procédé pour tester la force d'adhérence d'un conducteur à film mince formé sur un substrat, comprenant les étapes dans lesquelles :
on forme (310) un condensateur en plaçant une partie conductrice d'un instrument d'essai d'adhérence à proximité étroite dudit conducteur à film mince, en créant un intervalle entre eux, ladite partie conductrice n'étant pas en contact physique avec ledit conducteur à film mince ;
on crée (320) une différence de potentiel entre ladite partie conductrice et ledit conducteur à film mince, ladite différence de potentiel créant un champ électrique à travers ledit intervalle entre ladite partie conductrice et ledit conducteur à film mince, ledit champ électrique induisant une contrainte dans ledit conducteur à film mince, ledit intervalle constituant un espace dans lequel ledit conducteur à film mince peut être déplacé sous l'action dudit champ électrique dans le cas où ladite contrainte induite par ledit champ électrique est suffisante pour provoquer une déstratification dudit conducteur à film mince ; et, après ladite création,
on détermine (330) un paramètre électrique du champ électrique entre ladite partie conductrice et ledit conducteur à film mince, ledit paramètre électrique étant représentatif de ladite force d'adhérence.

2. Procédé selon la revendication 1, dans lequel ladite création de ladite différence de potentiel comprend l'application de ladite différence de potentiel pendant une période de temps prédéterminée.

3. Procédé selon la revendication 1 ou 2, dans lequel ledit instrument d'essai d'adhérence comporte en outre une ou plusieurs parties de support couplées à ladite partie conductrice, dans lequel ladite mise en place de ladite partie conductrice comprend l'application dudit instrument d'essai d'adhérence audit conducteur à film mince, ladite une ou lesdites plusieurs parties de support étant en contact avec ledit conducteur à film mince.

4. Procédé selon la revendication 3, dans lequel, après ladite application dudit instrument d'essai d'adhérence audit conducteur à film mince, ladite partie conductrice n'est pas en contact physique avec ledit conducteur à film mince, mais laisse ledit intervalle entre eux.

5. Procédé selon l'une quelconque des revendications précédentes, dans lequel ladite création d'une différence de potentiel comprend l'application d'une tension à au moins l'un de ladite partie conductrice et dudit conducteur à film mince, ladite tension créant ledit champ électrique à travers ledit intervalle entre ladite partie conductrice et ledit conducteur à film mince.

6. Procédé selon la revendication 5, dans lequel ladite création d'une différence de potentiel entre ladite partie conductrice et ledit conducteur à film mince comprend la connexion d'une alimentation en énergie à ladite partie conductrice et audit conducteur à film mince.

7. Procédé selon l'une quelconque des revendications précédentes, comprenant en outre :
la mise en place dudit substrat dans une chambre à vide ;
dans lequel lesdites étapes de mise en place de ladite partie conductrice, de création d'une différence de potentiel et de détermination du paramètre électrique sont exécutées sous vide dans ladite chambre à vide afin d'empêcher l'amorçage d'arcs.

8. Procédé selon l'une quelconque des revendications précédentes, dans lequel, après ladite formation, ledit intervalle entre ladite partie conductrice et ledit conducteur à film mince est rempli d'un diélectrique pour former un entrefer diélectrique dans lequel ledit conducteur à film mince peut être éloigné par pelage dudit subatrat sous l'action de la contrainte induite par ledit champ électrique.

9. Procédé selon la revendication 8, dans lequel ledit diélectrique est l'air.

10. Procédé selon l'une quelconque des revendications précédentes, dans lequel ladite différence de potentiel est comprise dans la plage de 1kV à 12kV.

11. Procédé selon l'une quelconque des revendications précédentes, dans lequel, après ladite formation, ledit intervalle est défini par une distance allant de 1,2 à 4 micromètres.

12. Procédé selon l'une quelconque des revendications précédentes, dans lequel ledit paramètre électrique est un paramètre électrique dudit condensateur.

13. Procédé selon la revendication 12, comprenant en outre
l'ajustement de ladite différence de potentiel entre ladite partie conductrice et ledit conducteur à film mince pendant ladite mesure, afin de régler ledit champ électrique à travers ledit intervalle créé entre ladite partie conductrice et ledit conducteur à film mince.

14. Procédé selon la revendication 13, dans lequel ledit ajustement de ladite différence de potentiel entre ladite partie conductrice et ledit conducteur à film mince comprend l'accroissement de ladite différence de potentiel et donc dudit champ électrique jusqu'à ce que ledit conducteur à film mince s'éloigne par pelage dudit substrat dans l'intervalle sous l'action de ladite contrainte induite par ledit champ électrique et entre en contact avec ladite partie conductrice.

15. Procédé selon la revendication 14, dans lequel ladite mesure détermine une valeur dudit paramètre électrique immédiatement avant un point où ledit conducteur à film mince entre en contact avec ladite partie conductrice.

16. Procédé selon la revendication 13, dans lequel ledit ajustement de ladite différence de potentiel entre ladite partie conductrice et ledit conducteur à film mince a pour résultat un premier rythme de variation dudit paramètre électrique pendant une première durée ;
dans lequel, en outre, ladite mesure détecte un second rythme de variation pendant une seconde durée, ledit second rythme de variation étant supérieur audit premier rythme de variation ; et
dans lequel, en outre, ladite mesure détermine en outre ledit paramètre électrique immédiatement après la première durée.

17. Procédé selon l'une quelconque des revendications 12 à 16, dans lequel ledit champ électrique agit de façon à induire une déstratification du conducteur à film mince, ladite mesure d'un paramètre électrique étant exécutée à un intervalle de temps prédéterminé après ladite création.

18. Procédé selon l'une quelconque des revendications 12 à 17, dans lequel ledit paramètre électrique est une différence de potentiel entre ladite partie conductrice et ledit conducteur à film mince.

19. Procédé selon l'une quelconque des revendications 12 à 18, dans lequel ledit paramètre électrique est une capacité entre ladite partie conductrice et ledit conducteur à film mince.

20. Procédé selon l'une quelconque des revendications 12 à 19, dans lequel ladite mesure comprend une mesure d'un rythme de variation dudit paramètre électrique.

21. Système pour tester la force d'adhérence d'un conducteur à film mince (102) formé sur un substrat (104), le système comportant :
un instrument (101) d'essai d'adhérence comportant une partie conductrice (110), dans lequel ledit instrument d'essai d'adhérence est construit de façon que ladite partie conductrice n'entre pas physiquement en contact avec ledit conducteur à film mince lorsque ledit instrument d'essai d'adhérence est appliqué audit conducteur à film mince, mais laisse un intervalle entre eux, formant ainsi un condensateur ;
une alimentation en énergie (120) ayant des moyens destinés à réaliser un couplage avec au moins l'un dudit instrument d'essai d'adhérence et dudit conducteur à film mince pour créer une différence de potentiel entre ladite partie conductrice et ledit conducteur à film mince, ladite différence de potentiel créant un champ électrique à travers ledit intervalle entre ladite partie conductrice et ledit conducteur à film mince, ledit champ électrique induisant une contrainte dans ledit conducteur à film mince, ledit intervalle formant un espace dans lequel ledit conducteur à film mince peut être déplacé sous l'action dudit champ électrique dans le cas où ladite contrainte induite par ledit champ électrique est suffisante pour provoquer une déstratification du conducteur à film mince ; et
un dispositif de mesure (140) ayant des moyens destinés à réaliser un couplage sur au moins l'un dudit instrument d'essai d'adhérence et dudit conducteur à film mince pour mesurer un paramètre électrique dudit champ électrique, ledit paramètre électrique étant représentatif de ladite force d'adhérence.

22. Système selon la revendication 21, dans lequel ledit instrument d'essai d'adhérence comporte en outre une ou plusieurs parties de support (210) couplées à ladite partie conductrice, dans lequel ladite une ou lesdites plusieurs parties de support sont en contact avec ledit conducteur à film mince formé sur ledit substrat lorsque ledit instrument d'essai d'adhérence est appliqué audit conducteur à film mince.

23. Système selon la revendication 22, dans lequel ladite une partie ou lesdites plusieurs parties de support sont construites de façon à entrer en contact avec ledit conducteur à film mince lorsque ledit instrument d'essai d'adhérence est appliqué audit conducteur à film mince afin que ladite partie conductrice ne soit pas en contact physique avec ledit conducteur à film mince, mais soit espacée dudit conducteur à film mince pour laisser entre eux lesdits intervalles.

24. Système selon la revendication 21, 22 ou 23, dans lequel, lorsque ledit instrument d'essai d'adhérence est appliqué audit conducteur à film mince, ladite partie conductrice fonctionne en tant que première plaque d'un condensateur et ledit conducteur à film mince fonctionne en tant que seconde plaque dudit condensateur, lesdites première et seconde plaques étant séparées par ledit intervalle.

25. Système selon l'une quelconque des revendications 21 à 24, dans lequel ladite alimentation en énergie est réglable.

26. Système selon la revendication 25, dans lequel ladite alimentation en énergie peut fonctionner de façon à augmenter ladite différence de potentiel et donc ledit champ électrique à travers ledit intervalle entre ladite partie conductrice et ledit conducteur à film mince jusqu'à ce que ledit dispositif de mesure, en mesurant ledit paramètre électrique, détecte que ledit conducteur à film mince s'est éloigné par pelage dudit substrat pour pénétrer dans l'intervalle sous l'action de la contrainte induite par ledit champ électrique et soit entré en contact avec ladite partie conductrice ; et
dans lequel ledit dispositif de mesure peut fonctionner de façon à détecter ledit paramètre électrique immédiatement avant l'instant ou ledit conducteur à film mince entre en contact avec ladite partie conductrice.

27. Système selon la revendication 25, dans lequel ladite alimentation en énergie peut fonctionner de façon à ajuster ladite différence de potentiel entre ladite partie conductrice et ledit conducteur à film mince pour produire un premier rythme de variation dans ledit paramètre électrique pendant une première durée ;
et dans lequel, en outre, ledit dispositif de mesure peut fonctionner de façon à détecter un second rythme de variation pendant une seconde durée, ledit second rythme de variation étant supérieur audit premier rythme de variation ; et
dans lequel, en outre, ledit dispositif de mesure peut fonctionner de façon à déterminer ledit paramètre électrique immédiatement avant l'apparition dudit second rythme de variation.

28. Système selon l'une quelconque des revendications 21 à 27, dans lequel ladite partie conductrice forme une première plaque d'un condensateur, dans lequel ledit conducteur à film mince forme une seconde plaque dudit condensateur, lesdites première et seconde plaques étant séparées par ledit intervalle ;
dans lequel ladite alimentation en énergie peut fonctionner de façon à créer une différence de potentiel entre lesdites première et seconde plaques dudit condensateur, ladite différence de potentiel créant un champ électrique à travers ledit intervalle entre lesdites première et seconde plaques ; et
dans lequel ledit dispositif de mesure peut fonctionner de façon à mesurer un paramètre électrique dudit condensateur, ledit paramètre électrique étant représentatif de ladite force d'adhérence.

29. Système selon l'une quelconque des revendications 21 à 28, dans lequel ladite alimentation en énergie peut fonctionner de façon à appliquer une tension à au moins l'un de ladite partie conductrice et dudit conducteur à film mince, ladite tension créant un champ électrique à travers ledit intervalle entre ladite partie conductrice et ledit conducteur à film mince, ledit champ électrique induisant une contrainte dans ledit conducteur à film mince.

30. Système selon l'une quelconque des revendications 21 à 29, comportant en outre :
une chambre à vide (150) configurée de façon à recevoir ledit substrat ;
dans lequel ledit instrument d'essai d'adhérence peut être positionné dans ladite chambre à vide lorsque ledit instrument d'essai d'adhérence est appliqué audit conducteur à film mince ; et
dans lequel ledit dispositif de mesure peut fonctionner de façon à mesurer ledit paramètre dudit champ électrique sous vide dans ladite chambre à vide afin d'empêcher l'amorçage d'arcs.

31. Système selon l'une quelconque des revendications 21 à 30, dans lequel ladite alimentation en énergie peut fonctionner de façon à créer ledit champ électrique afin d'induire une déstratification du conducteur à film mince, dans lequel ledit dispositif de mesure peut fonctionner de façon à mesurer ledit paramètre électrique un certain temps après que ladite différence de potentiel a créé ledit champ électrique, afin d'établir si une déstratification s'est effectivement produite.

32. Système selon l'une quelconque des revendications 21 à 31, dans lequel ledit paramètre électrique est une différence de potentiel entre ladite partie conductrice et ledit conducteur à film mince.

33. Système selon l'une quelconque des revendications 21 à 32, dans lequel ledit paramètre électrique est une capacité entre ladite partie conductrice et ledit conducteur à film mince.

34. Système selon l'une quelconque des revendications 21 à 33, dans lequel ledit dispositif de mesure peut fonctionner de façon à mesurer un rythme de variation dudit paramètre électrique.

35. Système selon l'une quelconque des revendications 21 à 34, comportant en outre :
un diélectrique positionné dans ledit intervalle entre ladite partie conductrice et ledit conducteur à film mince pour former un entrefer diélectrique dans lequel ledit conducteur à film mince peut être éloigné par pelage dudit substrat sous l'action de ladite contrainte induite par ledit champ électrique.

36. Système selon la revendication 35, dans lequel ledit diélectrique est l'air.

37. Système selon l'une quelconque des revendications 21 à 36, dans lequel ladite différence de potentiel est comprise dans la plage de 1kV à 12kV.
